# EUROPEAN PATENT APPLICATION

(11) **EP 3 840 186 A1**
(43) Date of publication of application: **23.06.2021**
(21) Application number: 19869737.7
(22) Date of filing: 04.09.2019
(51) Int. Cl.: H02K 3/34, H02K 3/48

(54) **ROTATING ELECTRIC MACHINE**

(30) Priority: 03.10.2018 JP 2018188402
(71) Applicant: Hitachi Astemo, Ltd., Hitachinaka-shi, Ibaraki 312-8503 (JP)
(72) Inventor: OKAMOTO, Hiromitsu, Hitachinaka-shi, Ibaraki 312-8503 (JP); NAKAYAMA, Kenichi, Hitachinaka-shi, Ibaraki 312-8503 (JP); NAKAYAMA, Kenji, Hitachinaka-shi, Ibaraki 312-8503 (JP); TAKANO, Toshiyuki, Hitachinaka-shi, Ibaraki 312-8503 (JP); OZEKI, Yoshio, Hitachinaka-shi, Ibaraki 312-8503 (JP); KOBAYASHI Hideaki, Hitachinaka-shi, Ibaraki 312-8503 (JP)
(74) Representative: Manitz Finsterwald Patent- und Rechtsanwaltspartnerschaft mbB
(86) International application number: PCT/JP2019/034694
(87) International publication number: WO 2020/071037

(57) **Abstract**

An object of the present invention is to improve the reliability of a rotating electric machine. A stator of a rotating electric machine includes a stator core on which teeth and slots are provided on a cylindrical inner surface, a plurality of windings arranged inside the slot, and slot liners disposed between an inner wall of the slot and the plurality of windings. Each of the plurality of windings has a first surface formed along a radial direction of the stator core and a second surface formed along a circumferential direction, the slot has a first inner wall facing the first surface, and a second inner wall facing the second surface, an adhesive layer expanded by processing is formed on a front surface of the slot liner, when an area of the first surface is larger than an area of the second surface, a distance between the first surface and the first inner wall is smaller than a distance between the second surface and the second inner wall, and when the area of the first surface is smaller than the area of the second surface, the distance between the first surface and the first inner wall is larger than the distance between the second surface and the second inner wall.

## Description

### Technical Field

The present invention relates to a rotating electric machine.

### Background Art

In the related art, insulating sheets called slot liners are arranged in a slot of a stator of a rotating electric machine so as to cover a coil. Liquid varnish is permeated into the slot liner, the coil is fixed, and the coil is insulated.

JP 2018-78764 A (PTL 1) is a background art of the present technical field. JP 2018-78764 A describes "a motor stator in which an insulating sheet is disposed on slot wall surfaces of teeth of a stator core constituting a motor and a coil is formed around the teeth with the insulating sheet interposed therebetween. a recess portion and a protrusion portion that are continuous with each other are formed on at least one of a front surface of the insulating sheet close to the slot wall surface or a front surface close to the coil, the insulating sheet is fixed to the slot wall surface or the coil with an adhesive present at a tip of the protrusion portion interposed therebetween, and the recess portion is a cooling medium flow path." (see ABSTRACT).

### Citation List

### Patent Literature

PTL 1: JP 2018-78764 A

### Summary of Invention

### Technical Problem

However, in the related art (PTL 1), a gap (clearance) between a slot inner wall (stator core) and the coil is not considered. A fixing force of the coil in the slot is changed by the gap between the slot inner wall and the coil, and thus, there is a possibility that the coil vibrates unexpectedly in the stator core. Accordingly, there is a concern that the reliability of the rotating electric machine is influenced.

### Solution to Problem

A typical example of the invention disclosed in the present application is as follows.

That is, a stator of a rotating electric machine includes a stator core on which teeth and slots are provided on a cylindrical inner surface, a plurality of windings arranged inside the slot, and slot liners disposed between an inner wall of the slot and the plurality of windings. Each of the plurality of windings has a first surface formed along a radial direction of the stator core and a second surface formed along a circumferential direction, the slot has a first inner wall facing the first surface, and a second inner wall facing the second surface, an adhesive layer expanded by processing is formed on a front surface of the slot liner, when an area of the first surface is larger than an area of the second surface, a distance between the first surface and the first inner wall is smaller than a distance between the second surface and the second inner wall, and when the area of the first surface is smaller than the area of the second surface, the distance between the first surface and the first inner wall is larger than the distance between the second surface and the second inner wall.

### Advantageous Effects of Invention

According to one aspect of the present invention, the coil is stably fixed, and the reliability of the rotating electric machine can be improved. Other objects, configurations, and effects will be made apparent in the following descriptions of the embodiments.

### Brief Description of Drawings

[FIG. 1] FIG. 1 is a schematic block diagram of a hybrid type electric car having a rotating electric machine according to an embodiment of the present invention mounted thereon.
[FIG. 2] FIG. 2 is a schematic diagram illustrating an overall configuration of the rotating electric machine.
[FIG. 3] FIG. 3 is an A-A cross-sectional view of FIG. 2.
[FIG. 4] FIG. 4 is a perspective view illustrating a stator core in which a coil is mounted.
[FIG. 5] FIG. 5 is a plan view of the stator core on which the coil is mounted as viewed from a coil end side.
[FIG. 6] FIG. 6 is a cross-sectional view of a sheet material constituting a slot liner.
[FIG. 7] FIG. 7 is a diagram illustrating the arrangement of segment coils in a slot.
[FIG. 8] FIG. 8 is a diagram illustrating the arrangement of the segment coils in the slot.
[FIG. 9] FIG. 9 is a diagram illustrating the arrangement of the segment coils in the slot.
[FIG. 10] FIG. 10 is a diagram illustrating the arrangement of the segment coils in the slot.
[FIG. 11] FIG. 11 is a diagram illustrating a shape of the slot liner.
[FIG. 12] FIG. 12 is a diagram illustrating the shape of the slot liner.
[FIG. 13] FIG. 13 is a diagram illustrating the shape of the slot liner.

### Description of Embodiments

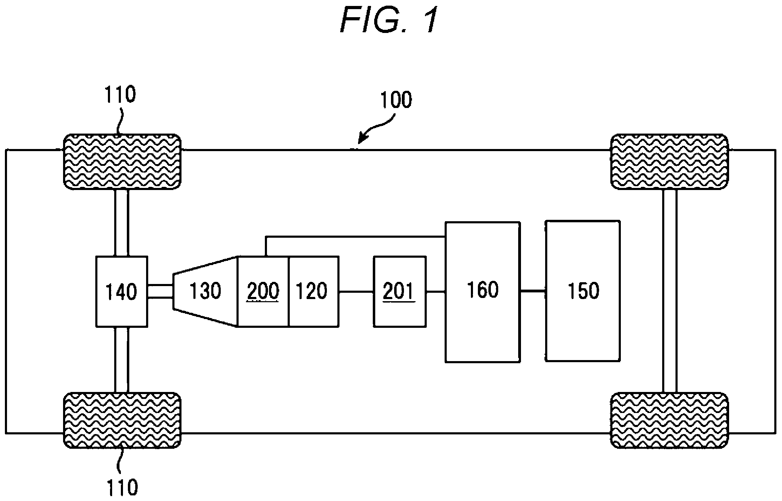

As illustrated in FIG. 1, a vehicle 100 of a hybrid car has an engine 120, a first rotating electric machine 200, a second rotating electric machine 201, and a high-voltage battery 150 mounted thereon. The battery 150 is constituted by a secondary battery such as a lithium-ion battery or a nickel-hydrogen battery, and outputs a high-voltage DC power of 250 to 600 volts or more. The battery 150 supplies the DC power to the rotating electric machines 200 and 201 when a driving force due to the rotating electric machines 200 and 201 is required, and the DC power is supplied from the rotating electric machines 200 and 201 during regenerative running. The DC power between the battery 150 and the rotating electric machines 200 and 201 is received and transmitted with a power conversion device 160 interposed therebetween.

Although not illustrated, the vehicle 100 has a battery that supplies a low voltage power (for example, 14-volt power) mounted thereon. A rotational torque due to the engine 120 and the rotating electric machines 200 and 201 is transmitted to front wheels 110 with a transmission 130 and a differential gear 140 interposed therebetween. The rotating electric machines 200 and 201 have the substantially configuration, and the rotating electric machine 200 will be representatively described below.

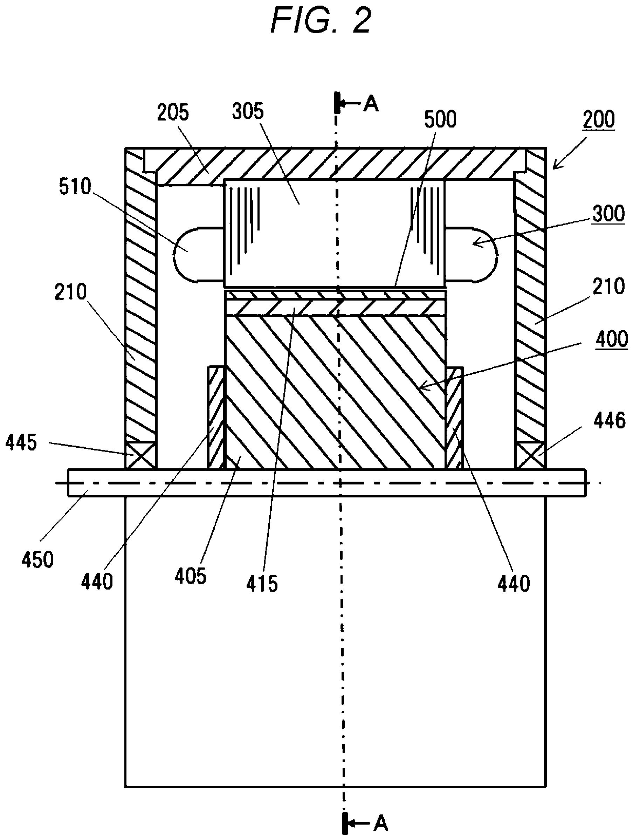

FIG. 2 is a schematic diagram illustrating an overall configuration of the rotating electric machine 200.

In FIG. 2, the inside of the rotating electric machine 200 is illustrated by illustrating a part of the rotating electric machine 200 in a cross section. As illustrated in FIG. 2, a stator 300 is supported inside a housing 205, and the stator 300 has a stator core 305 and a stator coil 510. A rotor 400 is rotatably supported on an inner peripheral side of the stator core 305 with a gap 500 interposed therebetween. The rotor 400 has a rotor core 405 fixed to a shaft 430, permanent magnets 415, and a non-magnetic end plate 420. The housing 205 has a pair of end brackets 210 provided with bearings 425 and 426, and the shaft 430 is rotatably supported by these bearings 425 and 426.

The rotating electric machine 200 is a three-phase synchronous motor with a built-in permanent magnet. The rotating electric machine 200 operates as an electric motor for rotating the rotor 400 by supplying a three-phase alternating current to the stator coil 510 wound around the stator core 305. When the rotating electric machine 200 is driven by the engine 120, the rotating electric machine operates as a generator and outputs a three-phase AC generated power. That is, the rotating electric machine 200 has both a function as an electric motor that generates a rotational torque by using electric energy and a function as a generator that generates a power by using mechanical energy, and can selectively use the above-described functions depending on a running state of the car.

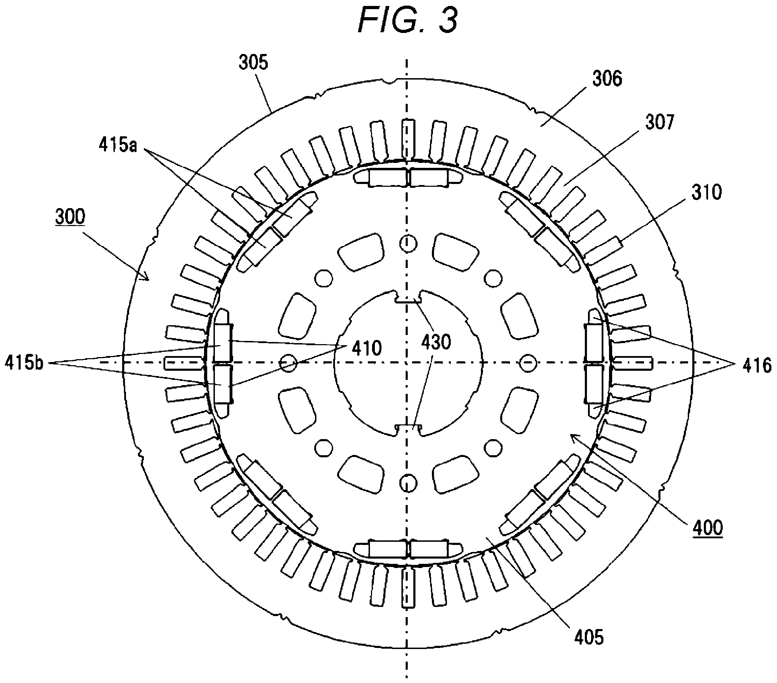

FIG. 3 is a schematic diagram illustrating a cross section of the stator 300 and the rotor 400 illustrated in FIG. 2, and illustrates an A-A cross-sectional view of FIG. 2. In FIG. 3, the description of the housing 205 and the shaft 430 is omitted.

The stator core 305 is formed by stacking a plurality of magnetic substances (for example, a plurality of electromagnetic steel plates) in an axial direction, and includes a yoke portion and a teeth portion (also referred to as a protrusion portion and a protrusion pole portion). The yoke portion includes a cylindrical yoke core 306 (also referred to as a core back) fitted to an inner peripheral side of the housing 205. The teeth portion includes a plurality of teeth cores 307 that protrude in a radial direction from an inner peripheral side of the yoke core 306 and is arranged in a circumferential direction at predetermined intervals. In FIG. 3, all teeth are not assigned by reference signs, and only some teeth cores 307 are representatively assigned by reference signs. A plurality of slots 310 is continuously formed in the circumferential direction between the adjacent teeth cores 307 so as to be closer to the rotor 400, respectively. Slot insulation (not illustrated) due to a slot liner is provided in the slot 310, and windings having multiple phases such as a U phase, a V phase, and a W phase constituting the stator 300 are attached. In the present embodiment, the stator coil 510 (see FIG. 2) is wound in distributed winding.

On the other hand, the rotor core 405 is formed by stacking a plurality of magnetic substances, for example, a plurality of electromagnetic steel plates in the axial direction. Rectangular magnet insertion holes 410 into which magnets are inserted are opened in the electromagnetic steel plates, and the permanent magnets 415 are embedded in the magnet insertion holes 410 and are fixed with an epoxy adhesive or the like. A width of the magnet insertion hole 410 in the circumferential direction is set to be larger than a width of the permanent magnet 415 in the circumferential direction, and magnetic gaps 416 are formed on both sides of the permanent magnet 415. The magnetic gaps 416 may be embedded with an adhesive, or may be integrally solidified with the permanent magnet 415 with a molding resin. The permanent magnets 415 act as field poles of the rotor 400.

A magnetizing direction of the permanent magnet 415 is oriented in the radial direction, and an orientation of the magnetizing direction is reversed for each field pole. That is, when a surface of a permanent magnet 415a close to the stator is an N pole and a surface thereof close to the axis is an S pole, a surface of an adjacent permanent magnet 415b close to the stator is an S pole and a surface thereof close to the axis is an N pole. These permanent magnets 415a and 415b are alternately arranged in the circumferential direction. The permanent magnet 415 may be embedded in the rotor core 405 after being magnetized, or may be magnetized by applying a strong magnetic field after being inserted into the rotor core 405 before being magnetized. The magnetized permanent magnet 415 is a strong magnet. When the magnet is magnetized before the permanent magnet 415 is fixed to the rotor 400, a strong attractive force is generated between the permanent magnet and the rotor core 405 when the permanent magnet 415 is fixed, and this attractive force hinders a work. There is a concern that dirt such as iron powder adheres to the permanent magnet 415 due to the strong attractive force. Thus, when the permanent magnet 415 is magnetized after being inserted into the rotor core 405, the productivity of the rotating electric machine is improved.

Neodymium-based or samarium-based sintered magnets, ferrite magnets, neodymium-based bonded magnets, and the like can be used as the permanent magnet 415. A residual magnetic flux density of the permanent magnet 415 is about 0.4 to 1.3 T.

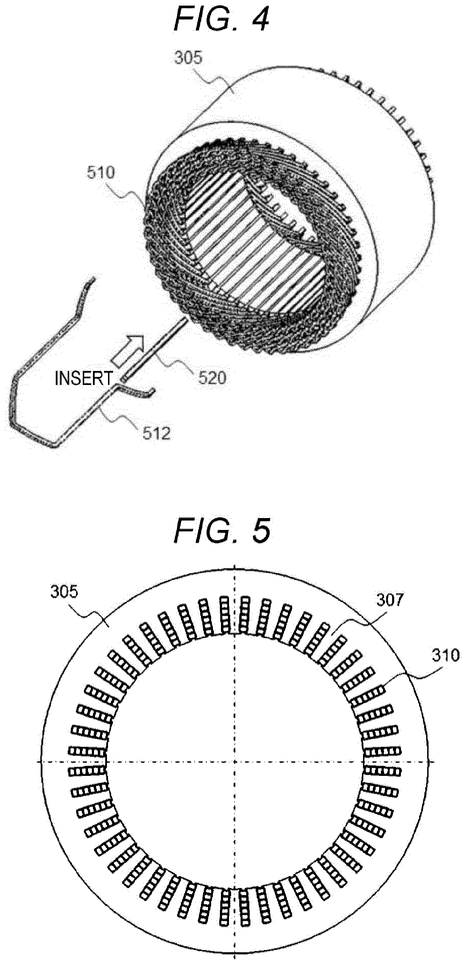

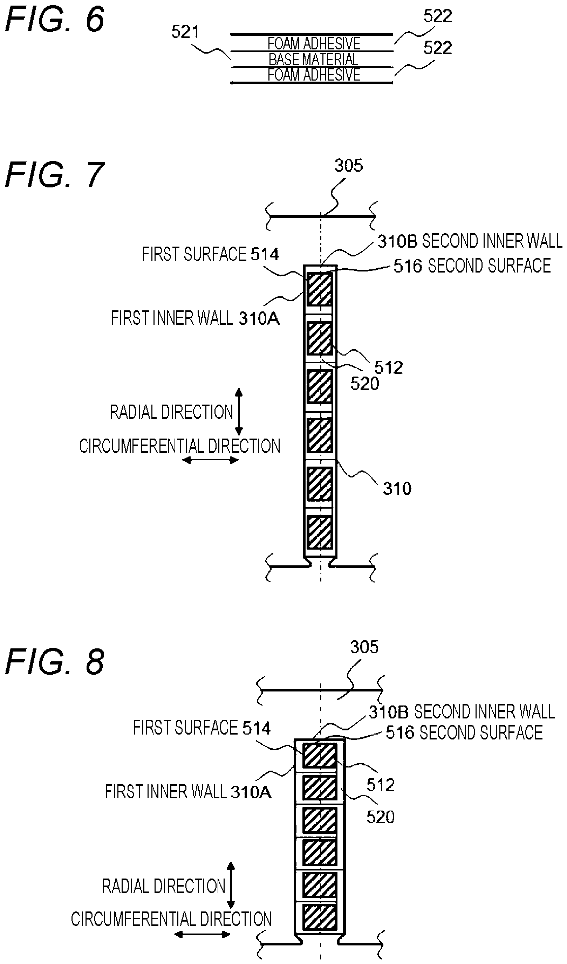

FIG. 4 is a perspective view illustrating the stator core 305 on which the coil is mounted, FIG. 5 is a plan view of the stator core 305 on which the coil is mounted as viewed from a coil end side, and FIG. 6 is a cross-sectional view of a sheet material forming a slot liner 520.

The stator 300 of the rotating electric machine 200 is constituted by the cylindrical stator core 305 and the stator coil 510 and the slot liner 520 inserted into the stator core 305.

As illustrated in FIG. 4, the stator coil 510 is housed in the slot 310 of the stator core 305. In the example illustrated in FIG. 4, the slot 310 is an open slot, and an opening is formed on the inner peripheral side of the stator core 305. As illustrated in FIGS. 3 and 5, a width of an opening formed on the innermost circumference of the slot 310 in the circumferential direction is substantially equal to a width of a coil attachment portion of each slot 310 to which the stator coil 510 is attached or is slightly smaller than the coil attachment portion.

The slot liners 520 are arranged in each slot 310. The slot liner 520 is, for example, an insulating sheet made of a heat-resistant resin, and has a thickness of about 0.1 to 0.5 mm. The slot liners 520 are arranged in the slot 310, and thus, a withstand voltage between the coils inserted into the slot 310 and between the coil and the inner surface of the slot 310 is improved. A required withstand voltage is retained even though an insulating film of the coil is deteriorated or damaged.

In the present embodiment, the slot liner 520 in which an adhesive layer is formed is used. For example, as illustrated in FIG. 6, the slot liner 520 is a sheet material in which adhesive layers 522 using a foam adhesive are formed on both surfaces of a base material 521 of a synthetic resin film (for example, a resin having high heat resistance such as polyethylene naphthalate). The foam adhesive is heated at a predetermined temperature and time. Thus, a foam resin expands and fills a gap (clearance) between the stator coil 510 and an inner wall of the slot 310, and fixes the stator coil 510 to the stator core 305. The adhesive may not be the foam adhesive as long as a volume is increased by processing (for example, heating). The base material 521 may be flame-retardant processed. For example, flame-retardant resin layers (for example, aramid resins such as Nomex (Nomex is a registered trademark)) may be provided on both surfaces of the base material 521 of a heat-resistant resin film, and the adhesive layers 522 may be provided on the flame-retardant resin layers. Paper may be used as the base material 521 instead of the synthetic resin film. As long as a volume of the adhesive layer 522 increases in a post-process (for example, heating process), an adhesive other than the foam adhesive may be used.

For example, the slot liner is made by a sheet material in which a foam adhesive layer 522 having a thickness of 40 µm is formed on a base material 521 in which Nomex layers having a thickness of 50 µm are formed on both surfaces of a polyethylene naphthalate synthetic resin film having a thickness of 100 µm. Since a thickness of the foam adhesive expands up to about 3 times by heating, a thickness of the slot liner 520 increases from 280 µm to 440 µm in this example.

As illustrated in FIG. 4, each of a plurality of segment coils 512 formed by molding a rectangular wire into a U shape is housed in two slots 310 separated by each other such that an end portion thereof is exposed from the slots 310 (that is, the stator core 305), and is disposed such that one end portion is adjacent to the other segment coil 512 and the other end portion is adjacent to the other segment coil 512. The end portions of the segment coil 512 are connected to each other so as to be close to the coil end (right back side in FIG. 4), and thus, the stator coil 510 wound around the stator core 305 in the distributed winding is formed. The segment coil 512 is disposed in each slot 310 such that a rectangle of a cross section of the rectangular wire is a long side in the circumferential direction and is a short side in the radial direction of the stator core 305. The segment coil may be disposed such that the rectangle of the cross section of the rectangular wire is a short side in the circumferential direction and is a long side in the radial direction of the stator core 305.

Next, an example in which the segment coil 512 is disposed in the slot 310 will be described. In the embodiment of the present invention, the gap (clearance) between the stator coil 510 and the stator core 305 in the slot 310 is different in the circumferential direction and the radial direction of the stator core 305, and one gap is larger than the other gap. The insertability of the coil is improved. When this gap is increased, workability when the coil is inserted is improved, but a coil space factor decreases. Thus, the output characteristics of the rotating electric machine 200 decrease.

The foam adhesive layer is formed on the slot liner 520. The foam adhesive fills the gap between the inner wall of the slot 310 and the segment coil 512 due to the expansion of the foam adhesive by heating, and the segment coil 512 is fixed.

FIG. 7 is a diagram illustrating the arrangement of the segment coils 512 in the slot 310.

As described above, the segment coil 512 is constituted by the rectangular wires which have cross sections and have substantially parallel side surfaces. In the example illustrated in FIG. 7, the radial direction of the stator core 305 is a long side of a cross section of the rectangular wire, and the circumferential direction is a short side.

At this time, an area of a first surface 514 which is a side surface of the segment coil 512 close to the long side of the rectangular wire is wider than an area of a second surface 516 which is a side surface of the segment coil 512 close to the short side of the rectangular wire, and the first surface faces a first inner wall 310A of the slot 310 with a large area. The slot liners 520 are arranged between the first surface 514 and the first inner wall 310A and between the second surface 516 and a second inner wall 310B. The slot liners 520 are also arranged between the segment coils 512. A distance between the first surface 514 of the segment coil 512 and the facing first inner wall 310A is smaller than a distance between the second surface 516 of the segment coil 512 and the facing second inner wall 310B.

In general, when the adhesive layer becomes thin, an adhesive force (for example, shear strength) of the adhesive is improved, and when an adhesive area becomes large, the adhesive force is improved. In particular, the adhesive force of the foam adhesive differs depending on the thickness after foaming (expansion ratio), and as the expansion ratio becomes smaller, a larger adhesive force is exhibited. In consideration of such characteristics, an optimum clearance and an expansion ratio are set by a contact area between the segment coil 512 and the slot liner 520.

The segment coil 512 vibrates in the slot 310 when an alternating current flows. Thus, when a fixing strength of the segment coil 512 in the slot 310 differs depending on a direction, abnormal vibration is likely to occur, and there is a concern that the rotating electric machine 200 is damaged. Thus, it is desirable that the fixing strength of the segment coil 512 in the slot 310 is larger in a direction in which a distance between the inner wall of the slot 310 and the segment coil 512 is smaller or is about the same in the circumferential direction and the radial direction of the stator core 305.

Thus, in the example illustrated in FIG. 7, the distance from the first inner wall 310A of the slot 310 is decreased on the first surface 514 having a large area, and the distance from the second inner wall 310B of the slot 310 is increased on the second surface 516 having a small area.

FIG. 8 is a diagram illustrating another arrangement of the segment coils 512 in the slot 310.

As described above, the segment coil 512 is constituted by the rectangular wires which have cross sections and have substantially parallel side surfaces. In the example illustrated in FIG. 8, the radial direction of the stator core 305 is the short side of the cross section of the rectangular wire and the circumferential direction is the long side.

At this time, the area of the first surface 514 which is the side surface of the segment coil 512 on the long side of the rectangular wire is smaller than the area of the second surface 516 which is the side surface of the segment coil 512 on the short side of the rectangular wire, and the first surface faces the first inner wall 310A of the slot 310 with a small area. The slot liners 520 are arranged between the first surface 514 and the first inner wall 310A and between the second surface 516 and a second inner wall 310B. The slot liners 520 are also arranged between the segment coils 512. The distance between the first surface 514 of the segment coil 512 and the facing first inner wall 310A is larger than the distance between the second surface 516 of the segment coil 512 and the facing second inner wall 310B.

It is desirable that the fixing strength of the segment coil 512 in the slot 310 is about the same in the circumferential direction and the radial direction of the stator core 305 or increases in the direction in which the distance between the inner wall of the slot 310 and the segment coil 512 is small. Thus, in the example illustrated in FIG. 8, the distance from the first inner wall 310A of the slot 310 is increased on the first surface 514 having a large area, and the distance from the second inner wall 310B of the slot 310 is decreased on the second surface 516 having a small area.

In the embodiment illustrated in FIGS. 7 and 8, the gap (clearance) between the inner wall of the slot 310 and the segment coil 512 has different sizes in the radial direction and the circumferential direction of the stator core 305, and the foam adhesive layer 522 formed on the slot liner 520 is expanded by a heating process. That is, the gap is increased on the surface on which the contact area between the segment coil 512 and the slot liner 520 is small. Thus, an expansion coefficient of the foam adhesive is increased, and the adhesive force per unit area is weakened. On the other hand, the gap decreases on the surface on which the contact area between the segment coil 512 and the slot liner 520 is large. Thus, an expansion coefficient of the foam adhesive is decreased, and the adhesive force per unit area is strengthened. The gap between the segment coil 512 and the slot liner 520 may be large in either the radial direction or the circumferential direction. Accordingly, the adhesive force due to the adhesive after foaming is optimized in the radial direction and the circumferential direction, and the coil is stably fixed. Thus, the reliability of the rotating electric machine 200 under a vibration condition is improved, and the rotating electric machine has more stable characteristics.

The foam adhesive layer 522 is formed on the slot liner 520, and thus, the coil can be fixed in the heating process. Accordingly, it is not necessary to apply varnish to the stator coil 510, and a manufacturing process of the stator 300 can be simplified.

Next, a modification example will be described. In the examples illustrated in FIGS. 7 and 8, a size of the gap between the inner wall of the slot 310 and the segment coil 512 is the same on two surfaces along the radial direction and is the same on two surfaces along the circumferential direction. However, the sizes of the gaps along the same direction may not be the same.

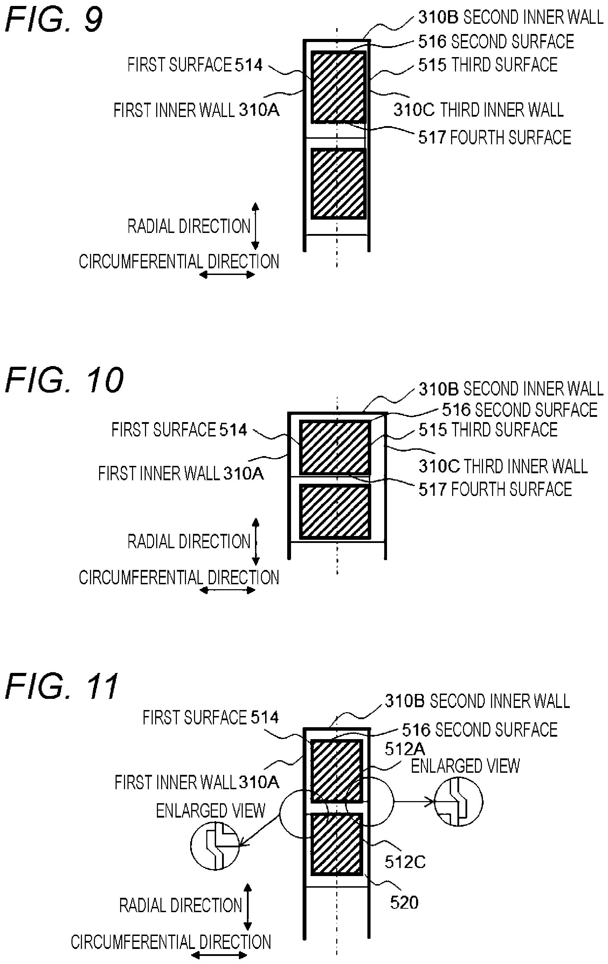

FIG. 9 is a diagram illustrating the arrangement of the segment coils 512 in the slot 310 in the modification example of the embodiment illustrated in FIG. 7. In FIG. 9, some of the segment coils 512 in the slot 310 are enlarged and illustrated.

As described above, the segment coil 512 is constituted by the rectangular wires which have cross sections and have substantially parallel side surfaces. In the example illustrated in FIG. 9, the radial direction of the stator core 305 is the long side of the cross section of the rectangular wire and the circumferential direction is the short side. The gap between the inner wall of the slot 310 and the side surface of the segment coil 512 is different on each surface. Specifically, in the example illustrated in FIG. 9, a third gap (distance between a third surface 515 and a facing third inner wall 310C) facing the third surface 515 is smaller than the first gap (distance between the first surface 514 and the facing first inner wall 310A) facing the first surface 514, the first gap facing the first surface 514 is smaller than the second gap (distance between the second surface 516 and the facing second inner wall 310B) facing the second surface 516, and the second gap facing the second surface 516 is smaller than a fourth gap (distance between a fourth surface 514 and a surface of the adjacent segment coil 512) facing the fourth surface 517.

As described above, in the embodiment illustrated in FIG. 9, the distance from the inner wall of the slot 310 is decreased on the first surface 514 and the third surface 515 having the large areas, and the distance from the inner wall of the slot 310 or from the adjacent segment coil 512 is increased on the second surface 516 and the fourth surface 517 having the small areas. Thus, the adhesive force on each surface of the segment coil 512 may be larger in the order of the third gap, the first gap, the second gap, and the fourth gap, or may be about the same.

FIG. 10 is a diagram illustrating the arrangement of the segment coils 512 in the slot 310 in the modification example of the embodiment illustrated in FIG. 8. In FIG. 10, some of the segment coils 512 in the slot 310 are enlarged and illustrated.

As described above, the segment coil 512 is constituted by the rectangular wires which have cross sections and have substantially parallel side surfaces. In the example illustrated in FIG. 10, the radial direction of the stator core 305 is the short side of the cross section of the rectangular wire and the circumferential direction is the long side. The gap between the inner wall of the slot 310 and the side surface of the segment coil 512 is different on each surface. Specifically, in the embodiment illustrated in FIG. 10, the fourth gap (distance between the fourth surface 514 and the surface of the adjacent segment coil 512) facing the fourth surface 517 is smaller than the second gap (distance between the second surface 516 and the facing second inner wall 310B) facing the second surface 516, the second gap facing the second surface 516 is smaller than the first gap facing the first surface 514, and the first gap (distance between the first surface 514 and the facing first inner wall 310A) facing the first surface 514 is smaller than the third gap (distance between the third surface 515 and the facing third inner wall 310C) facing the third surface 515.

As described above, in the embodiment illustrated in FIG. 10, the distance from the inner wall of the slot 310 or the adjacent segment coil 512 is decreased on the second surface 516 and the fourth surface 517 having the large areas, and the distance from the inner wall of the slot 310 is increased on the first surface 514 and the third surface 515 having the small areas. Thus, the adhesive force on each surface of the segment coil 512 may be larger in the order of the fourth gap, the second gap, the first gap, and the third gap, or may be about the same.

Next, an example of a shape of the slot liner 520 will be described. In the above-described embodiment, the slot liner 520 is formed in a so-called inverted B shape so as to wind each segment coil 512 with right ends of the surfaces on which two segment coils 512 surrounded by one slot liner 520 face as a start point and an end point. In this shape, all surfaces of the segment coil 512 are covered with the slot liner 520, and the slot liner 520 is also provided between the segment coils 512. Thus, high insulation and high coil fixing force can be obtained.

In the embodiment illustrated in FIG. 11, the slot liner 520 is formed in a so-called S shape in which a right lower end of an upper segment coil 512A is used as a start point, a right side surface, an upper side surface, a left side surface, and a lower side surface are covered in order, a right side surface, a lower side surface, and a left side surface of a lower segment coil 512C are covered in order, and a left upper end of the lower segment coil 512C is used as an end point. At the start point and the end point, the end portion of the slot liner 520 may overlap with the other portion as illustrated in the enlarged view. When the slot liner 520 is disposed such that the end portion overlap with the other portion, the gap is not generated in the slot liner 520, and thus, insulation performance can be improved. This shape is similar to the above-described inverted B shape in that all the surfaces of the segment coil 512 are covered with the slot liner 520 and the slot liner 520 is provided between the segment coils 512, but the coil fixing force is lower than the B shape. The insertability of the segment coil 512 is improved, and the amount of the slot liner 520 used can be reduced.

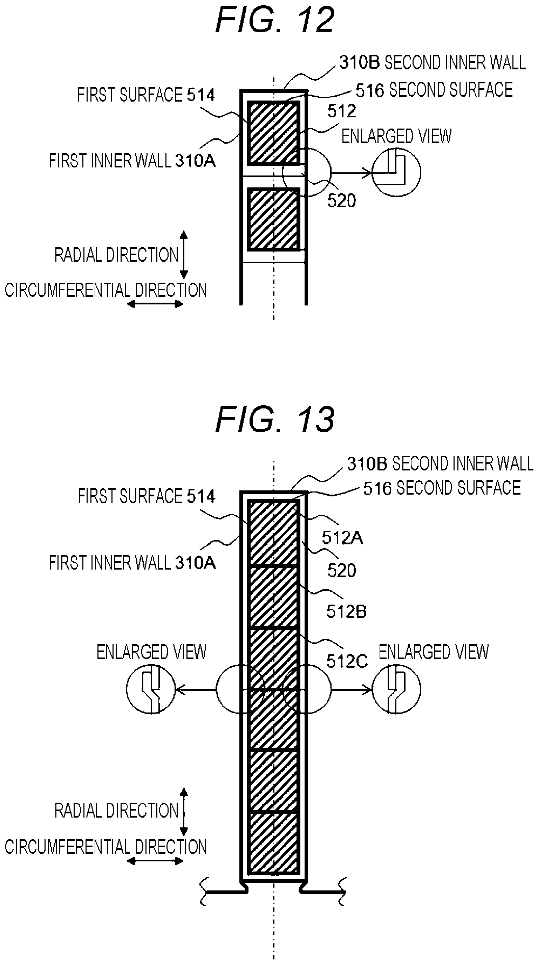

In the embodiment illustrated in FIG. 12, the slot liner 520 is formed in a so-called O-shape in which the right lower end of the segment coil 512 is used as the start point, the right side surface, the upper side surface, the left side surface, and the lower side surface are covered in order, and the right lower end is used as the end point. At the start point and the end point, the end portion of the slot liner 520 may overlap with the other portion as illustrated in the enlarged view. When the slot liner 520 is disposed such that the end portion overlap with the other portion, the gap is not generated in the slot liner 520, and thus, insulation performance can be improved.

In the embodiment illustrated in FIG. 13, the slot liner 520 is formed in an inverted U shape in which the lower right end of the lower segment coil 512C is used as the start point, the right side surfaces of the segment coils 512C to 512A, the upper side surface of the upper segment coil 512A, and the left side surfaces of the segment coils 512A to 512C are covered in order, and the left lower end of the lower segment coil 512C is used as the end point. The three segment coils 512 from the bottom are covered with another U-shaped slot liner 520. Accordingly, the segment coil 512 and the inner wall of the slot 310 (stator core 305) are insulated, but the slot liner 520 is not disposed between the segment coils 512 arranged in one slot 310, and is only insulated by the coating of the segment coil 512. Thus, since the segment coils 512 arranged in one slot 310 are not insulated by the slot liner 520, the same-phase current needs to flow in the segment coils 512 arranged in one slot 310.

At the start point and the end point, the end portion of the slot liner 520 may overlap with another slot liner 520 as illustrated in the enlarged view. When the slot liner 520 is disposed such that the end portion overlap with the other portion, the gap is not generated in the slot liner 520, and thus, insulation performance can be improved. Although the slot liner 520 covers the space between the segment coil 512 and the inner wall of the slot 310, since the slot liner 520 is not provided between the segment coils 512, the coil fixing force is lower than that of the B shape or the S shape. However, the insertability of the segment coil 512 is improved, and the amount of the slot liner 520 used can be reduced.

The present invention is not limited to the aforementioned embodiments, and includes various modification examples and equivalent configurations within the gist of the appended claims. For example, the aforementioned embodiments are described in detail in order to facilitate easy understanding of the present invention, and the present invention is not limited to necessarily include all the described components. A part of the configuration of one embodiment may be replaced with the configuration of another embodiment. The configuration of another embodiment may be added to the configuration of one embodiment. Another configuration may be added, removed, and substituted to, from, and into some of the configurations of the aforementioned embodiments.

### Reference Signs List

- 100: vehicle
- 110: wheel
- 120: engine
- 130: transmission
- 140: differential gear
- 150: battery
- 160: power conversion device
- 200: rotating electric machine
- 205: housing
- 210: end bracket
- 300: stator
- 305: stator core
- 306: yoke core
- 307: teeth core
- 310: slot
- 510: stator coil
- 512: segment coil
- 514: first surface
- 515: third surface
- 516: second surface
- 517: fourth surface
- 520: slot liner

## Claims

1. A stator of a rotating electric machine, comprising:
a stator core on which teeth and slots are provided on a cylindrical inner surface;
a plurality of windings arranged inside the slot; and
slot liners disposed between an inner wall of the slot and the plurality of windings,
wherein each of the plurality of windings has a first surface formed along a radial direction of the stator core and a second surface formed along a circumferential direction,
the slot has a first inner wall facing the first surface, and a second inner wall facing the second surface,
an adhesive layer expanded by processing is formed on a front surface of the slot liner,
when an area of the first surface is larger than an area of the second surface, a distance between the first surface and the first inner wall is smaller than a distance between the second surface and the second inner wall, and
when the area of the first surface is smaller than the area of the second surface, the distance between the first surface and the first inner wall is larger than the distance between the second surface and the second inner wall.

2. The stator of a rotating electric machine according to claim 1, wherein
each of the plurality of windings further has a third surface formed in substantially parallel with the first surface with the same area, and a fourth surface that is formed in substantially parallel with the second surface with the same area and faces a side surface of another winding,
the slot has a third inner wall facing the third surface,
when areas of the first surface and the third surface are larger than areas of the second surface and the fourth surface, the distance between the first surface and the first inner wall and a distance between the third surface and the third inner wall are smaller than any of the distance between the second surface and the second inner wall and a distance between the fourth surface and the side surface of the other winding.

3. The stator of a rotating electric machine according to claim 1, wherein
each of the plurality of windings further has a third surface formed in substantially parallel with the first surface with the same area, and a fourth surface that is formed in substantially parallel with the second surface with the same area and faces a side surface of another winding,
the slot has a third inner wall facing the third surface,
when areas of the first surface and the third surface are smaller than areas of the second surface and the fourth surface, the distance between the first surface and the first inner wall and a distance between the third surface and the third inner wall are larger than any of the distance between the second surface and the second inner wall and a distance between the fourth surface and the side surface of the other winding.

4. The stator of a rotating electric machine according to any one of claims 1 to 3, wherein the adhesive layer is formed by a foam adhesive expanded by heating.

5. The stator of a rotating electric machine according to any one of claims 1 to 3, wherein the slot liners are provided between the plurality of windings and the inner wall of the slot and between the plurality of windings.

6. The stator of a rotating electric machine according to any one of claims 1 to 3, wherein the slot liners are provided between the plurality of windings and the inner wall of the slot, and are not provided between the plurality of windings.
